# EUROPÄISCHE PATENTSCHRIFT

(11) **EP 0 792 996 B1**
(45) Veröffentlichungstag und Bekanntmachung des Hinweises auf die Patenterteilung: **13.08.2003**
(21) Anmeldenummer: 97102168.8
(22) Anmeldetag: 12.02.1997
(51) Int. Cl.: E21B 7/30, E21B 7/20, E21B 7/04, F16L 55/165

(54) **Vorrichtung zum Verbinden eines Rohrstranges mit einem Gerät zum Erstellen von Erdbohrungen**
Apparatus for coupling a pipe string with a service for making earth bore holes
Appareil d'accouplement d'un train de tubes avec un dispositif pour réaliser des forages dans le sol

(30) Priorität: 02.03.1996 DE 19608056
(43) Veröffentlichungstag der Anmeldung: 03.09.1997
(73) Patentinhaber: Tracto-Technik Paul Schmidt Spezialmaschinen, 57368 Lennestadt (DE)
(72) Erfinder: Püttmann, Franz-Josef, 57368 Lennestadt (DE)
(74) Vertreter: König, Reimar, Dr.-Ing.

(56) Entgegenhaltungen:
- EP-A- 0 694 675
- WO-A-87/03353
- GB-A- 2 291 690
- US-A- 4 100 972

## Beschreibung

Die Erfindung betrifft eine Vorrichtung zum Verbinden eines Rohrstranges mit einem Gerät zum Erstellen von Erdbohrungen oder zum Erneuern von Altrohren und zum Einziehen des Endes eines Einzelrohres in eine Muffenverbindung des vorhergehenden Rohrstranges.

Geräte zum Erstellen von Erdbohrungen oder zum Erneuern von Altrohren können aus pneumatisch getriebenen Rammbohrgeräten bestehen, die einen Rohrstrang in die vom Gerät erstellte Erdbohrung nachziehen, Gleichzeitig kann dieses Gerät mit seiner Spitze ein vorhandenes Altrohr zertrümmern, folgt dabei dem Lauf des Altrohres und zieht den neuen Rohrstrang in die so gebildete, freie Erdbohrung nach.

Auf den nachzuziehenden Rohrstrang wirken dabei sowohl die von dem Gerät herrührenden dynamischen Kräfte als auch die Reibungskräfte in der Erdbohrung, so daß eine kräftige, stoßsichere Verbindung zwischen dem Gerät zum Erstellen von Erdbohrungen und dem Rohrstrang gewährleistet sein muß.

Wird der Rohrstrang von einem Kanalschacht aus eingezogen, muß der Rohrstrang aus Einzelrohren bestehen, deren Länge kleiner als der Durchmesser bzw. die Innenabmessung des Kanalschachts ist, damit sie sich axial an das Ende des Rohrstranges ansetzen lassen, wenn dieses im Begriff ist, aus dem Schacht in die Erdbohrung einzutreten.

Handelt es sich bei dem Rohrstrang um eine Druckwasserleitung, lassen sich die Einzelrohre untereinander mittels Gewinden miteinander verbinden, die verhältnismäßig hohen Axialkräften widerstehen können. Problematisch ist dabei die sichere Verbindung mit dem Gerät zum Erstellen der Erdbohrung, da hier die erwähnten Stöße und Vibrationen auftreten, denen Gewinde aufgrund der dort stets vorhandenen Kerbwirkung weniger gut gewachsen sind.

Werden Abwasserrohre eingezogen, bei denen die Muffenverbindung so ausgebildet ist, daß diese selber abdichtet oder bei denen zur Muffenabdichtung stramme Dichtringe verwendet werden, so sind besonders große Fügekräfte zum Zusammenbringen zweier Einzelrohre erforderlich. Trotzdem sind diese Rohrverbindungen in der Regel bei Vibrationseinwirkung durch schlagende Rammbohrgeräte nicht zugfest. Deshalb ist es auch hier erforderlich, diese während des Rohreinzuges über ein Zugmittel (z.B. Kette oder Seil) einzuziehen.

Aus der WO-Offenlegungsschrift 87/03353 A ist eine Vorrichtung in Gestalt eines mit Messern besetzten Berstkopfes am vorderen Ende einer Schubhülse bekannt, die unter Zwischenschaltung von Rohrabschnitten mit Hilfe einer Presse vorgetrieben wird. Die Vorrichtung dient dazu, ein im Erdreich verlegtes Altrohr zu zerstören und einzelne Rohrabschnitte zusammen mit dem Berstkopf ins Erdreich bzw. in das Altrohr zu pressen.

Des weiteren ist in der US-Patentschrift 4 100 972 eine Vorrichtung dargestellt und beschrieben, bei der ein Erdbohrgerät unter Zuhilfenahme eines Seils und einer Klemmvorrichtung sowie eines Adapters mit einzelnen Rohrabschnitten zu einem einheitlichen und stabilen Langkörper miteinander verspannt werden. Diese

Vorrichtung bedarf jedoch außer der Klemmvorrichtung zusätzlich eines Spannantriebs. Dieser Spannantrieb muß das Seil spannen, während gleichzeitig ein weiterer Spannantrieb die Klemmvorrichtung in Verbindung mit dem Adapter, dem Nachziehrohr bzw. Rohrstrang und dem Gerät hält. Ohne diese Voraussetzungen können die Klemmbacken der Klemmvorrichtung nicht wirksam werden.

Eine Weiterentwicklung der vorerwähnten Klemmvorrichtung ist aus der EP 0 694 675 A1 bekannt; sie verzichtet auf den Spannantrieb und verwendet einen Adapter in Gestalt eines L-förmigen Druckstücks, dessen einer Schenkel verlängert ist und eine Art Schlitten bildet. Der Schlitten trägt zwei Klemmelemente, die das Erdbohrgerät und ein Nachziehrohr mit Hilfe eines Seils statisch, d.h. unveränderlich bis zum Lösen bzw. Ansetzen eines neuen Nachziehrohrs gegeneinander verspannen.

Dementsprechend liegt der Erfindung das Problem zugrunde, eine Vorrichtung zum Verbinden eines Rohrstranges mit einem Gerät zum Erstellen von Erdbohrungen oder zum Erneuern von Altrohren und zum Einziehen des Endes eines Einzelrohres in eine Muffenverbindung des vorhergehenden Rohrstranges zu schaffen, die sich einfach handhaben läßt, große Kräfte aufzubringen in der Lage ist und sowohl den durch das Gerät zum Erstellen von Erdbohrungen erzeugten dynamischen Kräften als auch den auf den Rohrstrang in der Bohrung wirkenden Reibungskräften zu widerstehen vermag.

Ausgehend von dieser Problemstellung werden als Lösung ein an das Ende des aus Einzelrohren bestehenden Rohrstranges oder eines damit zu verbindenden Einzelrohres ansetzbarer Spannrahmen, ein Spannantrieb am Spannrahmen und ein einerseits mit dem Gerät und andererseits mit dem Spannantrieb gekuppelter über ein Umlenkrad geführter Strang vorgeschlagen.

Der Spannantrieb greift am Seil oder der Kette an, so daß aufgrund des sich am Ende des Rohrstranges oder des damit zu verbindenden Einzelrohres abstützenden Spannrahmens eine Druckkraft auf den Rohrstrang und das damit zu verbindende Einzelrohr aufgebracht wird, die diese bis zum Anschlag zusammenschiebt. Hierdurch läßt sich einerseits eine Muffenverbindung zwischen dem Ende des Rohrstranges und einem Einzelrohr bewerkstelligen und andererseits ein enger Verbund mit dem Gerät zum Erstellen der Erdbohrung herstellen, wobei die durch das Gerät bewirkten Stöße und die Reibungskräfte des Rohrstranges in der Erdbohrung von dem Seil oder der Kette aufgenommen werden, während auf den Rohrstrang eine durch den Spannantrieb erzeugte Druckkraft wirkt.

Der Spannantrieb kann aus einer drehantreibbaren Winde, vorzugsweise einer Spillwinde, bestehen, kann jedoch auch als Linearantrieb mit wenigstens einer Halterung für das Seil oder die Kette gestaltet sein. Da sich der Linearantrieb einerseits am Spannrahmen und andererseits mittels der Halterung des Seils oder der Kette am Gerät zum Erstellen der Erdbohrung abstützt, bewirkt eine Betätigung des Linearantriebs ein Spannen des Seils oder der Kette und damit ein Zusammenschieben des Rohrstranges mit einem damit zu verbindenden Einzelrohr.

Um den Linearantrieb mehrmals betätigen zu können, wenn der Rohrstrang und das Seil oder die Kette sehr lang sind und daher ein großer Spannweg erforderlich ist, können am Spannrahmen eine ortsfeste Halterung und am Linearantrieb eine bewegliche Halterung angeordnet sein. Durch wechselweises Betätigen des Linearantriebs und der beiden Halterungen läßt sich das Seil oder die Kette schrittweise spannen, bis die gewünschte Spannkraft erreicht ist.

Wird das Seil oder die Kette über eine Umlenkrolle am Linearantrieb geführt und sind je eine Halterung vor und hinter der Umlenkrolle angeordnet, läßt sich der Spannweg des Seils oder der Kette gegenüber dem Weg des Linearantriebs verdoppeln, so daß sich die Vorrichtung platzsparend gestalten läßt.

Die Halterung vor der Umlenkrolle am Linearantrieb kann aus einen Seil- oder Kettenrad mit einer lösbaren Rückdrehsperre bestehen, so daß sich der Linearantrieb senkrecht zur Vorschubrichtung anordnen läßt und in Vorschubrichtung besonders wenig Platz beansprucht. Dabei kann der Linearantrieb aus wenigstens einer am Spannrahmen senkrecht zur Vorschubrichtung angeordneten Hydraulik-Kolben-Zylinder-Einheit bestehen und das Seiloder Kettenrad mit der Rückdrehsperre am Spannrahmen als Umlenkrolle ausgebildet und im Bereich der Anlage des Spannrahmens am Rohrende angeordnet sein.

In diesem Fall läßt sich die Rückdrehsperre am Seiloder Kettenrad besonders einfach als Klinkensperre ausbilden, das vorzugsweise eine auskuppelbare Klinke aufweist, um die Vorspannung des Seils oder der Kette aufheben zu können. Wenn die Kette als Rundgliederkette ausgebildet ist, läßt sich das Kettenrad mit der Rückdrehsperre als Kettennuß ausbilden, die die Rundgliederkette ohne Durchrutschen führt. In Verbindung mit einer Rundgliederkette läßt sich auch die Halterung am Spannrahmen besonders einfach als schräger Tragarm mit einem einseitig offenen Schlitz zum Einhängen eines Kettengliedes ausbilden.

Ein besonders kompakter Aufbau, der dennoch hohe Spannkräfte aufbringt, läßt sich erreichen, wenn zwei parallele Hydraulik-Kolben-Zylinder-Einheiten einerseits am Spannrahmen befestigt sind und dazwischen das Kettenrad mit der Rückdrehsperre angeordnet ist, andererseits mit ihren linearbeweglichen Teilen am Spannrahmen in Führungen geführt und mittels einer Querwelle verbunden sind, auf der die Umlenkrolle angeordnet ist.

Die Erfindung wird nachstehend anhand eines in der Zeichnung dargestellten Ausführungsbeispiels des näheren erläutert. In der Zeichnung zeigen:
- Fig. 1: eine schematische Ansicht eines von einem Kanalschacht aus in das Erdreich mittels eines Rammbohrgeräts eingezogenen Rohrstranges, teilweise im Schnitt,
- Fig. 2: eine Seitenansicht, teilweise im Schnitt, der erfindungsgemäßen Vorrichtung und
- Fig. 3: eine Vorderansicht der erfindungsgemäßen Vorrichtung mit zwei Spannzylindern.

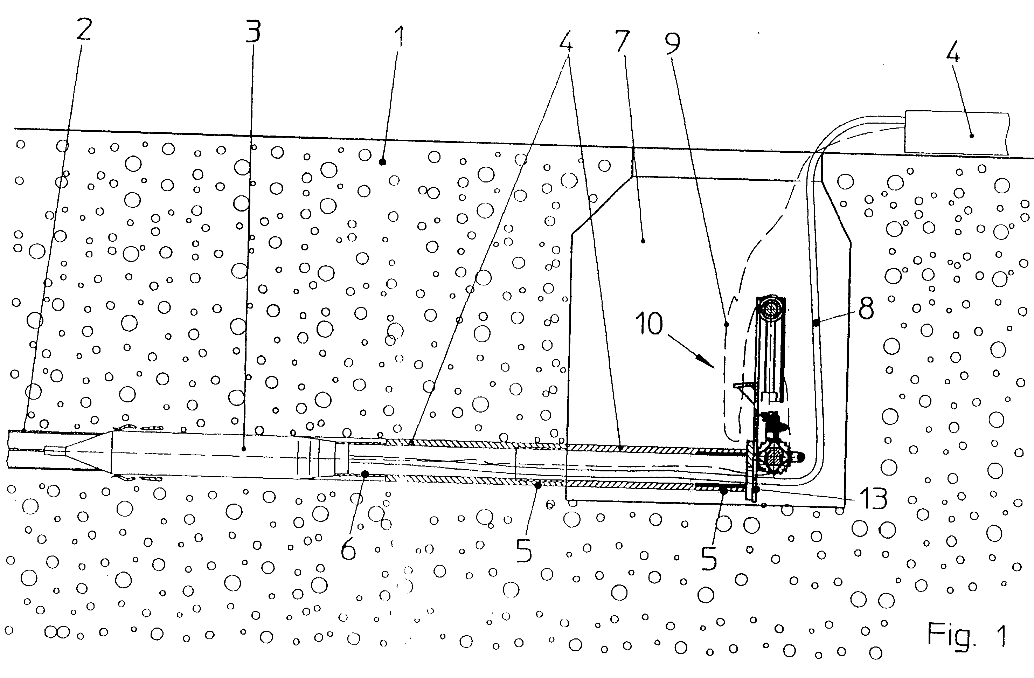

Wie aus Fig. 1 ersichtlich, verläuft im Erdreich 1 ein Altrohr 2, das mittels eines pneumatisch angetriebenen Rammbohrgeräts 3 zertrümmert wird. Dieses Rammbohrgerät 3 zieht einen aus Einzelrohren 4 zusammengesetzten Rohrstrang 5 nach. Jedes Einzelrohr weist an einem Ende eine Muffe 5 und am anderen Ende ein in die Muffe 5 eines vorhergehenden Rohres 4 eingreifendes, verjüngtes Ende 6 auf.

Das Rammbohrgerät 3 wird von einem Kanalschacht 7 aus in das Altrohr 2 eingeführt, und die benötigte Energie wird dem Rammbohrgerät 3 über einen Druckluftschlauch 8, der durch den aus den Einzelrohren 4 bestehenden Rohrstrang geführt ist, zugeführt.

Um den aus den Einzelrohren 4 bestehenden Rohrstrang mit dem Rammbohrgerät 3 und die Einzelrohre 4 fest miteinander zu verbinden, ist am Rammbohrgerät eine Kette 9 befestigt, die durch eine Öffnung 13 an einer Grundplatte 11 eines Spannrahmens 10 geführt ist.

Der Spannrahmen 10 läßt sich mittels eines auswechselbaren, dem Rohrdurchmesser angepaßten Adapters 12 auf das Ende des letzten Einzelrohres 4 aufsetzen. Der Druckluftschlauch 8 und die Kette 9 sind durch die schlitzartige Öffnung 13 nach außen geführt, damit die Spanneinheit jederzeit zwischen dem schon eingezogenen und dem noch einzuziehenden Rohrstrang herausgenommen werden kann, um ein weiteres neu einzuziehendes Rohr einzubringen. Im Bereich der Öffnung 13 ist an der Grundplatte ein als Kettennuß ausgebildetes Kettenrad 14 drehbar gelagert, das eine Rückdrehsperre in Form eines gezahnten Sperrades 15 und eines damit zusammenwirkenden Klinkenmechanismus 16 aufweist, Der Klinkenmechanismus 16 läßt sich mittels eines Handhebels 17 entsperren. Beiderseits des Kettenrades 14 ist je eine Hydraulik-Kolben-Zylinder-Einheit 18 angeordnet und mit einem Ende an der Grundplatte 11 befestigt. An den Enden der Kolbenstangen 19 ist eine Querwelle 20 befestigt, die in Führungen 22 an der Grundplatte 11 geführte Rollen 21 sowie mittig eine Umlenkrolle 23 trägt.

Parallel zu den Hydraulik-Kolben-Zylinder-Einheiten 18 sind an der Welle und an der Grundplatte 11 Rückholfedern 24 angeordnet, die die Kolbenstange 19 in die eingefahrene Stellung zurückholen, wenn die Hydraulik-Kolben-Zylinder-Einheiten 18 drucklos sind. Das Rückholen kann selbstverständlich auch über doppeltwirkende Kolbenzylindereinheiten erfolgen. Es ist auch möglich, anstatt eines Hydraulik-Kolben-Zylinderpaares nur einen Hydraulik-Kolben-Zylinder zu verwenden, wobei sich dann das Kettenrad 14 unter und die Umlenkrolle über dem Zylinder befindet.

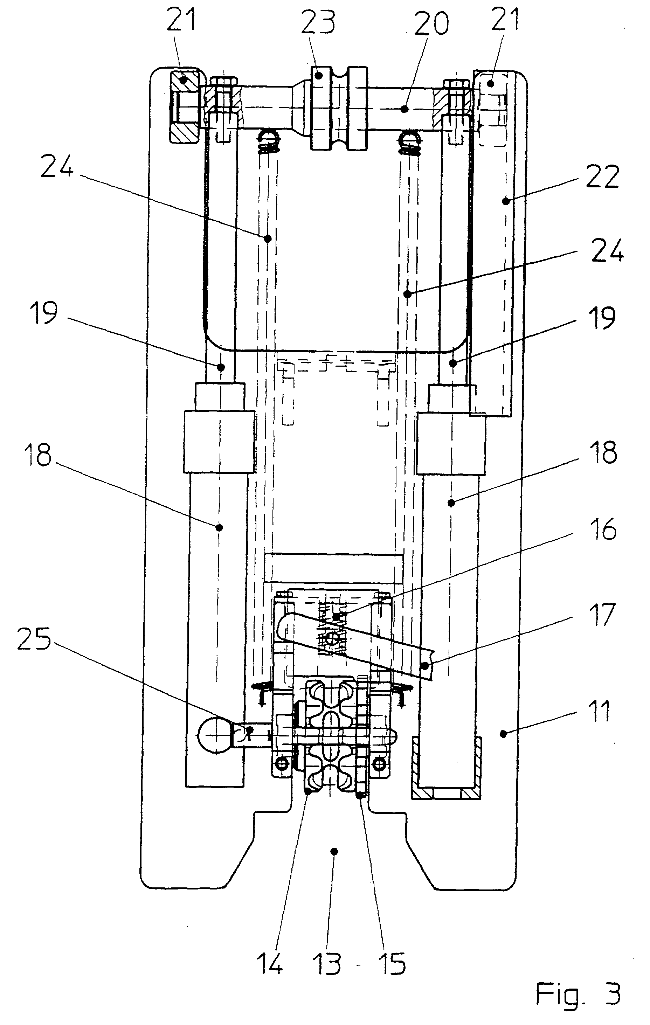

Quer über das Kettenrad 14 in Fig. 3 erstreckt sich ein herausziehbarer Bolzen 25, der ein ungewolltes Herausfallen der Kette 9 aus dem Kettenrad 14, besonders beim Nachspannen, verhindert. An der Grundplatte 11 ist des weiteren eine Haltevorrichtung in Form eines Kragarms 26 mit einem Schlitz 27 angeordnet, so daß sich die Wirkungsweise der erfindungsgemäßen Vorrichtung wie folgt ergibt:

Es sei angenommen, daß ein Einzelrohr 4 mittels des Rammbohrgeräts 3 unter gleichzeitigem Zertrümmern des Altrohrs 2 so weit in die Erdbohrung eingezogen wurde, daß die Muffe 5 am Rohrende mit der Wand des Kanalschachts 7 abschließt. Der Spannrahmen 10 wird von diesem Einzelrohr 4 abgenommen und gibt dessen hinteres Ende mit der Muffe 5 frei. Nunmehr läßt sich ein auf der Erdoberfläche gelagertes Einzelrohr 4 über den Fluidschlauch 8 und die Kette 9 vorschieben, bis dieses Einzelrohr im Kanalschacht 7 mit seinem verjüngten Ende 6 an die Muffe 5 angesetzt werden kann. Hierauf wird der Adapter 12 in die Muffe 5 des neu anzusetzenden Einzelrohres 4 geschoben, die Kette 9 über die Kettennuß 14 und die Umlenkrolle 23 gelegt und von Hand straff gezogen, so daß sich ein Kettenglied in den Schlitz 27 am Kragarm 26 einhängen läßt.

Dieses Spannen der Kette 9 von Hand geschieht mit in die Hydraulik-Kolben-Zylinder-Einheiten 18 zurückgezogenen Kolbenstangen 19. Werden nunmehr die Hydraulik-Kolben-Zylinder-Einheiten 18 mit Drucköl beaufschlagt, wird die Kette unter Abrollen über das Kettenrad 14 und die Umlenkrolle 23 gespannt.

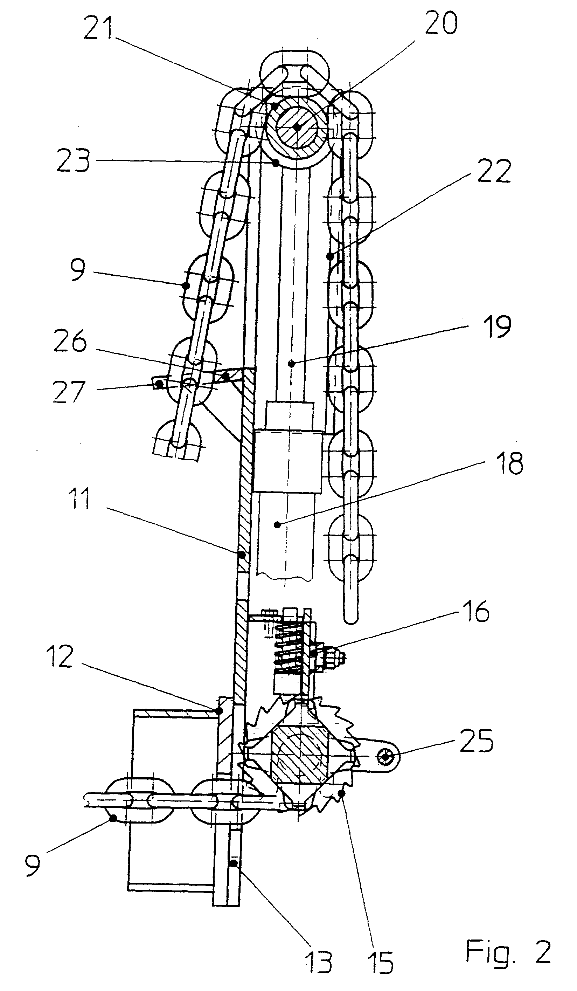

Reicht die Kettenspannung, nachdem der volle in Fig. 2 und 3 dargestellte Hub erreicht ist, noch nicht aus, bzw. ist das verjüngte Ende 6 des hinteren Einzelrohres 4 noch nicht vollständig in die Muffe 5 eingezogen, läßt sich die Umlenkrolle 23 mit den Kolbenstangen 19 unter dem Einfluß der Rückholfedern 24 in die eingezogene Stellung zurückbewegen, ohne daß die Kettenspannung innerhalb des verlegten Rohrstranges nachläßt, da die Kettennuß 14 durch den in das gezahnte Sperrad 15 eingreifenden Klinkenmechanismus 16 an einer Rückdrehung gehindert ist. Das Kettenteil zwischen der Kettennuß 14 und der Haltevorrichtung 26, 27 lockert sich daher, läßt sich jedoch durch Einhängen eines anderen Kettengliedes in die Haltevorrichtung 26, 27 straffen, wonach sich die Hydraulik-Kolben-Zylinder-Einheiten 18 erneut unter Druck setzen lassen, um die Umlenkrolle 23 in die in Fig. 2 und 3 dargestellte Lage zu bewegen und ein Nachziehen zu bewirken.

Dieser Vorgang läßt sich wiederholen, bis sämtliche Muffenverbindungen der Einzelrohre 4 bündig ineinander geschoben sind und eine Verbindung mit dem Rammbohrgerät 3 mit einer vorgegebenen Vorspannung hergestellt ist.

Nunmehr läßt sich das Rammbohrgerät 3 wieder in Betrieb setzen, bis das noch in den Kanalschacht 7 ragende letzte Einzelrohr 4 wieder so weit vorgezogen ist, daß es etwa bündig mit der Kanalwand abschließt, wonach das Ansetzen eines eines weiteren Einzelrohres 4 in der beschriebenen Weise wiederholt wird.

Soll die auf die Kette 9 aufgebrachte Vorspannung aufgehoben werden, um den Spannrahmen 10 vom letzten Einzelrohr 4 abzunehmen, braucht nur der Klinkenmechanismus 16 mittels des Handhebels 17 im Sinne einer Aufhebung der Verriegelung betätigt zu werden, so daß sich die Kettennuß 14 beim Einfahren der linearen Spanneinheit im entgegengesetzten Sinne drehen kann, um dann eine entsprechende Länge der Kette 9 freizugeben.

Statt eines Linearantriebes in Form der Hydraulik-Kolben-Zylinder-Einheiten 18 läßt sich auch ein Drehantrieb für die Kettennuß 14, beispielsweise in Gestalt eines Hydromotors verwenden, mit dem ein stetiges Spannen der Kette 9 ohne Unterbrechungen möglich ist.

Die Hydraulikzylindereinheiten lassen sich auch durch einen Gewindespindelantrieb ersetzen, dessen Spindel manuell von Hand mit einer Knarre oder automatisch mit einem Antriebsmotor gedreht wird. Entscheidend ist, daß der Spannrahmen senkrecht zur Vortriebsrichtung steht.

Anstelle einer Kette 9 läßt sich auch ein Stahlseil verwenden, jedoch sind in diesem Fall Haltevorrichtungen in Form von Seilklemmen erforderlich.

Besteht die drehantreibbare Winde aus einer Spillwinde, läßt sich eine hohe Zugspannung auf das Seil aufbringen, wenn das freie Ende des Seils mehrfach um den Spill geschlungen ist und mit einer verhältnismäßig kleinen Zugkraft gezogen wird.

## Patentansprüche

1. Vorrichtung zum Verbinden eines aus Einzelrohren (4) bestehenden Rohrstranges (5) mit einem Gerät (3) zum Erstellen von Erdbohrungen oder zum Erneuern von Altrohren (2) und zum Einziehen des Endes eines Einzelrohres (4) in eine Muffe (5, 6) am Ende des Rohrstranges mit
- einem vertikalen Spannrahmen (11),
- einem Spannantrieb (18, 19) am Spannrahmen und
- einem einerseits mit dem Gerät (3) und andererseits mit dem Spannantrieb (18, 19) gekuppelten über ein Umlenkrad (14) geführten Strang (9).

2. Vorrichtung nach Anspruch 1, **gekennzeichnet durch** einen Spindelantrieb.

3. Vorrichtung nach Anspruch 1, **gekennzeichnet durch** eine drehantreibbare Winde als Spannantrieb.

4. Vorrichtung nach Anspruch 3, **gekennzeichnet durch** eine Spillwinde als Spannantrieb.

5. Vorrichtung nach Anspruch 1, **gekennzeichnet durch** einen Linearantrieb (18, 19) mit wenigstens einer Halterung (26, 27) für den Strang (9).

6. Vorrichtung nach Anspruch 5, **gekennzeichnet durch** eine ortsfeste Halterung am Spannrahmen (11) und eine bewegliche Halterung am Linearantrieb (18,19).

7. Vorrichtung nach Anspruch 5, **dadurch gekennzeichnet, daß** der Strang (9) über eine Umlenkrolle (23) am Linearantrieb (18,19) geführt und je eine Halterung (16,17; 26,27) vor und hinter der Umlenkrolle (23) angeordnet ist.

8. Vorrichtung nach Anspruch 7, **dadurch gekennzeichnet, daß** die Halterung vor der Umlenkung (23) am Linearantrieb (18,19) aus einem Seil- oder Kettenrad (14) mit einer lösbaren Rückdrehsperre (15,16) besteht.

9. Vorrichtung nach Anspruch 8, **dadurch gekennzeichnet, daß** der Linearantrieb aus wenigstens einer am Spannrahmen (11) senkrecht zur Vorschubrichtung angeordneten Hydraulik-Kolben-Zylinder-Einheit (18) besteht und das Seil- oder Kettenrad (14) mit der Rückdrehsperre (15,16) am Spannrahmen (11) als Umlenkrolle ausgebildet sowie im Bereich der Anlage des Spannrahmens (11) am Rohrende (5) angeordnet ist.

10. Vorrichtung nach Anspruch 8 oder 9, **gekennzeichnet durch** eine als Klinkensperre ausgebildete Rückdrehsperre (15,16).

11. Vorrichtung nach einem der Ansprüche 5 bis 10, **dadurch gekennzeichnet, daß** die Kette (9) als Rundgliederkette, das Kettenrad (14) mit der Rückdrehsperre (15,16) als Kettennuß und die Halterung (26,27) am Spannrahmen (11) als schräger Kragarm mit einem einseitig offenen Schlitz zum Einhängen eines Kettengliedes ausgebildet ist.

12. Vorrichtung nach einem der Ansprüche 9 bis 11, **dadurch gekennzeichnet, daß** zwei parallele Hydraulik-Kolben-Zylinder-Einheiten (18) einerseits am Spannrahmen (11) befestigt sind und dazwischen das Kettenrad (14) mit der Rückdrehsperre (15, 16) angeordnet ist, sowie andererseits mit ihren linear beweglichen Teilen (19) am Spannrahmen (11) in Führungen (22) geführt und mittels einer Welle (20) verbunden sind, auf der die Umlenkrolle (23) angeordnet ist.

## Claims

1. Apparatus for connecting a string (5) of pipes composed of individual pipes (4) to a device (3) for making bores through the ground or for replacing old pipes (2), and for drawing the end of an individual pipe (4) into a socket (5,6) on the end of the string of pipes, having
- a vertical bracing frame (11),
- a bracing drive (18, 19) on the bracing frame, and
- a line (9) which is run over a direction-changing wheel (14) and is coupled on the one hand to the device (3) and on the other hand to the bracing drive (18, 19).

2. Apparatus according to claim 1, **characterised by** a spindle drive.

3. Apparatus according to claim 1, **characterised by**, as a bracing drive, a winch able to be driven in rotation.

4. Apparatus according to claim 3, **characterised by**, as a bracing drive, a capstan.

5. Apparatus according to claim 1, **characterised by** a linear drive (18, 19) having at least one retaining means (26, 27) for the line (9).

6. Apparatus according to claim 5, **characterised by** a fixed retaining means on the bracing frame (11) and a movable retaining means on the linear drive (18, 19).

7. Apparatus according to claim 5, **characterised in that** the line (9) is run via a direction-changing pulley (23) at the linear drive (18, 19), and respective retaining means (16, 17; 26, 27) are arranged upstream and downstream of the direction-changing pulley (23).

8. Apparatus according to claim 7, **characterised in that** the retaining means upstream of the change of direction (23) at the linear drive (18, 19) comprise a sheave or chain-wheel (14) having a disengageable rotary non-reversing lock (15, 16).

9. Apparatus according to claim 8, **characterised in that** the linear drive comprises at least one hydraulic piston-and-cylinder unit (18) which is arranged on the bracing frame (11) perpendicularly to the direction of feed, and the sheave or chain-wheel (14) on the bracing frame (11), which sheave or chain-wheel (14) has the rotary non-reversing lock (15, 16), is in the form of a direction-changing pulley and is arranged in the region where the bracing frame (11) rests against the end (5) of the pipe.

10. Apparatus according to claim 8 or 9, **characterised in that** the rotary non-reversing lock (15, 16) is in the form of a pawl-operated lock.

11. Apparatus according to one of claims 5 to 10, **characterised in that** the chain (9) is in the form of a round-link chain, the chain wheel (14) having the rotary non-reversing lock (15, 16) is in the form of a link-chain sprocket, and the retaining means (26, 27) on the bracing frame (11) is in the form of an oblique cantilever arm having a slot which is open at one end for hooking a chain link into.

12. Apparatus according to one of claims 9 to 11, **characterised in that** two parallel hydraulic piston-and-cylinder units (18) on the one hand are fastened to the bracing frame (11), and the chain wheel (14) having the rotary non-reversing lock (15, 16) is arranged between them, and on the other hand are guided on the bracing frame (11) in guides (22) by their linearly movable parts (19) and are connected by means of a shaft (20) on which the direction-changing pulley (23) is arranged.

## Revendications

1. Dispositif pour relier un train de tubes (5) constitué de tubes individuels (4) avec un appareil (3) destiné à réaliser des forages dans le sol ou à remplacer des anciens tubes (2) et à faire rentrer l'extrémité d'un tube individuel (4) dans un manchon (5, 6) sur l'extrémité d'un train de tubes avec
- un cadre de serrage (11) vertical
- une commande de serrage (18, 19) sur le cadre de serrage et
- un train (9) guidé par une roue de renvoi (14) et couplée d'une part avec l'appareil (3) et d'autre part avec la commande de serrage (18, 19).

2. Dispositif selon la revendication 1, **caractérisé par** une commande de broche.

3. Dispositif selon la revendication 1, **caractérisé par** un treuil pouvant être entraîné en rotation comme commande de serrage.

4. Dispositif selon la revendication 3, **caractérisé par** un cabestan comme commande de serrage.

5. Dispositif selon la revendication 1, **caractérisé par** un entraînement linéaire (18, 19) avec au moins une fixation (26, 27) pour le train (9).

6. Dispositif selon la revendication 5, **caractérisé par** une fixation fixe sur le cadre de serrage (11) et une fixation mobile sur l'entraînement linéaire (18, 19).

7. Dispositif selon la revendication 5, **caractérisé en ce que** le train (9) est guidé au moyen d'un galet de renvoi (23) sur la commande linéaire (18, 19) et une fixation (16, 17 ; 26, 27) est disposée respectivement devant et derrière le galet de renvoi (23).

8. Dispositif selon la revendication 7, **caractérisé en ce que** la fixation avant la déviation (23) sur la commande linéaire (18, 19) est constitué par une roue à câble ou à chaîne (14) avec un dispositif de blocage anti-retour (15, 16) amovible.

9. Dispositif selon la revendication 8, **caractérisé en ce que** la commande linéaire est constitué par au moins une unité hydraulique-piston-cylindre (18) disposée sur le cadre de serrage (11) perpendiculairement au sens d'avancement et la roue à câble ou à chaîne (14) est conçue avec le dispositif de blocage anti-retour (15, 16) sur le cadre de serrage (11) comme un galet de renvoi et est disposée dans la zone de l'installation du cadre de serrage (11) sur l'extrémité de tuyau (5).

10. Dispositif selon la revendication 8 ou 9, **caractérisé par** un dispositif de blocage anti-retour (15, 16) conçu comme un dispositif de blocage à cliquet.

11. Dispositif selon l'une quelconque des revendications 5 à 10, **caractérisé en ce que** la chaîne (9) est conçue comme une chaîne à maillons ronds, la roue à chaîne (14) est conçue avec le dispositif de blocage anti-retour (15, 16) comme un pignon à chaîne et la fixation (26, 27) est conçue sur le cadre de serrage (11) comme un bras en porte-à-faux incliné avec une fente ouverte sur un côté pour l'accrochage d'un maillon de chaîne.

12. Dispositif selon l'une quelconque des revendications 9 à 11, **caractérisé en ce que** d'une part deux unités hydraulique-piston-cylindre (18) parallèles sont fixées sur le cadre de serrage (11) et la roue à chaîne (14) est disposée dans l'intervalle avec le dispositif de blocage anti-retour (15, 16), et d'autre part sont guidées avec leurs parties (19) mobiles de façon linéaire sur le cadre de serrage (11) dans des guides (22) et sont reliées au moyen d'un arbre (20), sur lequel est disposé le galet de renvoi (23).
